# EUROPÄISCHE PATENTSCHRIFT

(11) **EP 1 721 786 B1**
(45) Veröffentlichungstag und Bekanntmachung des Hinweises auf die Patenterteilung: **28.03.2012**
(21) Anmeldenummer: 06405167.5
(22) Anmeldetag: 18.04.2006
(51) Int. Cl.: B60R 19/24

(54) **Stossfängersystem**
Bumper system
Système de pare-chocs

(30) Priorität: 13.05.2005 CH 8522005
(43) Veröffentlichungstag der Anmeldung: 15.11.2006
(73) Patentinhaber: Constellium Switzerland AG, 8048 Zürich (CH)
(72) Erfinder: Rebuffet, Olivier, 75014 Paris (FR); Fritz, Klaus, 78315 Radolfzell (DE); Bompard, Serge, 75019 Paris (FR)
(74) Vertreter: Fénot, Dominique

(56) Entgegenhaltungen:
- EP-A1- 0 949 092
- WO-A1-03/051654
- DE-A1- 10 041 063
- JP-A- 2003 127 896

## Beschreibung

Vorliegende Erfindung betrifft ein Stossfängersystem, enthaltend eine in Fahrzeugquerrichtung verlaufende Stossstange, wenigstens ein an dieser angebrachtes Verbindungselement zum Befestigen der Stossstange an einem Fahrzeug, insbesondere an einem Längsträger eines Personenkraftwagens, sowie Befestigungsmittel zum Anbringen einer lösbaren Abschleppeinrichtung, wobei das Verbindungselement ein Mehrkammer-Extrusionsprofil aus Metall mit einer in Fahrzeuglängsrichtung verlaufenden Profillängsachse (x) ist, und das Verbindungselement als Sicherheitselement ausgebildet ist, welches in einem Aufprallereignis durch Stauchung Aufprallenergie absorbiert. Die Erfindung betrifft ferner ein Verfahren zur Herstellung des erfindungsgemässen Stossfängersystems.

Stossfängersysteme mit dem genannten Aufbau haben unter anderem die Aufgabe, die dahinter liegende Fahrzeugstruktur bei kleineren Aufprallereignissen vor der auf das Fahrzeug einwirkenden Aufprallenergie zu schützen. Dazu sind die Verbindungselemente häufig als Hohlkammerprofile ausgebildet, welche bei einem Aufprallereignis durch Stauchung, insbesondere durch eine geordnete Faltung, in Profillängsrichtung Aufprallenergie absorbieren. Die Stossfängersysteme müssen daher reparaturfreundlich sein, damit diese oder einzelne Komponenten davon, wie Stossstange oder Verbindungselement, nach einem Aufprallereignis mit relativ geringem Reparaturaufwand ersetzt werden können.

Im Stossfängersystem sind in der Regel auch Befestigungsmittel vorgesehen, welche erlauben, das Fahrzeug bei einer Panne abzuschleppen. Diese Befestigungsmittel umfassen in der Regel ein im Stossfängersystem angebrachtes Schraubgewinde, in welches eine Abschleppöse eingeschraubt werden kann. Bei vielen Fahrzeugtypen ist das Schraubgewinde in die Stossstange eingelassen. Die durch das Abschleppen ausgelöste Zugkraft wird hier über die Stossstange in die Fahrzeugstruktur eingeleitet.

Es sind auch Stossfängersysteme bekannt, bei welchen eine Gewindebuchse seitlich an eine Wand des Verbindungselements angeschweisst ist. Die Abschleppöse wird hier durch eine Öffnung in der Stossstange hindurch geführt und in die Gewindebuchse eingeschraubt. Vorteil dieser Lösung ist, dass die Zugkraft direkt auf das Verbindungselement einwirkt und die Stossstange entlastet bleibt.

Werden die Befestigungsmittel an das Verbindungselement angebracht, so ist darauf zu achten, dass die Eigenschaften des Verbindungselementes im Zusammenhang mit der Aufnahme von Aufprallenergie nicht beeinträchtigt werden. D.h., das Verbindungselement sollte trotz dieser Befestigungsmittel bei einem Aufprallereignis weiterhin ein optimales Stauch- bzw. Faltverhalten aufweisen.

In beiden Fällen ist das Anbringen von Befestigungsmitteln zur Aufnahme einer Abschleppöse mit erheblichem Zusatzaufwand verbunden, da die Innengewinde in separaten Verarbeitungsschritten und nicht selten in Handarbeit, z.B. mittels Schweissverbindung, an das Stossfängersystem angebracht werden müssen.

Ein derartiges Stoßfängersystem, welche die Merkmale des Oberbegriffs des Anspruchs 1 aufweist, ist aus der DE 100 41 063 A1 bekannt.

Der Erfindung liegt die Aufgabe zugrunde, ein verbessertes Stossfängersystem mit integrierten Befestigungsmitteln zum Anbringen einer Abschleppeinrichtung vorzuschlagen, welches sich gegenüber bisherigen Stossfängersystemen durch eine bessere Integration der besagten Befestigungsmittel auszeichnet.

Erfindungsgemäss wird die Aufgabe dadurch gelöst, dass die Befestigungsmittel in einer der Hohlkammern des Verbindungselementes angeordnet sind.

Außerdem wird die Aufgabe durch ein Verfahren gemäß Anspruch 11 gelöst.

Das Verbindungselement ist bevorzugt als Deformationselement, auch Crashbox genannt, ausgebildet und zeichnet sich durch ein optimales Faltverhalten im Aufprallereignis aus. Das Faltverhalten wird unter anderem durch den Werkstoff, d.h. die Metalllegierung, durch die Wärmebehandlung des Verbindungselementes, sowie durch die Querschnittsgeometrie des Verbindungselementes, insbesondere durch die Anordnung der Profilwände und Profilstege sowie deren Wanddicken bestimmt.

Die Hohlkammer, welche die Befestigungsmittel aufnimmt, wird vorzugsweise durch innere Profilwände ausgebildet. Die Hohlkammer ist besonders bevorzugt als Hohlzylinder ausgebildet, d.h. die Hohlkammer weist einen kreisförmigen Querschnitt auf. Die besagte Hohlkammer ist bevorzugt innerhalb des durch äussere Profilwände begrenzten Verbindungselementes angeordnet und ist über einen oder mehrere Verbindungsstege mit der äusseren Profilwand des Verbindungselements verbunden. Die Hohlkammer ist bevorzugt in einem zentralen Bereich des Verbindungselements angeordnet. Dies kann z. B. der geometrische Mittelpunkt sein, wobei mögliche Symmetrieachsen die Hohlkammer durchqueren bzw. sich innerhalb der Hohlkammer schneiden. Die Verbindungsstege führen bevorzugt im wesentlichen radial von der zentralen Hohlkammer nach aussen.

Die Hohlkammer kann auch innerhalb des Verbindungselementes jedoch randseitig angeordnet sein. In diesem Fall wird ein Teil der Hohlkammer durch die äussere Profilwand des Verbindungselementes ausgebildet. Die Hohlkammer kann ferner auch eine im Strangpressverfahren seitlich an das Verbindungselement angeformte Hohlkammer sein.

Ein wesentlicher Punkt der Erfindung liegt darin, dass die Hohlkammer, welche die Befestigungsmittel aufnimmt, in einem Strangpressverfahren zur Herstellung eines Ausgangsprofils geformt und somit integraler Teil des besagten Profils wird. Aus dem Ausgangsprofil wird in nachfolgenden Nachbearbeitungsschritten das Verbindungselement hergestellt.

Das Verbindungselement wird bevorzugt aus einem extrudierten Leichmetallprofil gefertigt. Das Verbindungselement ist bevorzugt aus Aluminium oder einer Aluminiumlegierung.

Die Befestigungsmittel zur Anbindung der Abschleppeinrichtung umfassen bevorzugt ein Innengewinde, in welches sich die Abschleppeinrichtung einschrauben lässt.

In einer ersten Ausführung der Erfindung ist das Innengewinde in die Profilwand der Hohlkammer integriert, d.h. das Innengewinde ist integraler Bestandteil der Profilwand. Das Innengewinde ist bevorzugt mittels eines zerspanenden Verfahrens, wie Schneiden, Drehen, Fräsen, Bohren etc., in die Profilwand der Hohlkammer eingearbeitet.

Die Hohlkammer ist gemäss dieser Ausführungsform vorteilhaft von zylinderförmiger Gestalt. Die Profilwand des Ausgangsprofils, welche die besagte Hohlkammer begrenzt, weist bevorzugt eine Wanddicke (h+d) auf. Die besagte Wanddicke ist gegenüber den Profilstegen und/oder den übrigen Profilwänden bevorzugt um ein gewisses Mass, insbesondere um das Mass (d) dicker ausgebildet.

Das Innengewinde verläuft bevorzugt über einen definierten Längsabschnitt der Hohlkammer, welcher kürzer ist als die Gesamtlänge der Hohlkammer. Das Innengewinde kann im der Stossstange zugewandten Endabschnitt des Verbindungselementes, dem der Fahrgastzelle zugewandten Endabschnitt des Verbindungselementes oder in einem Zwischenbereich angeordnet sein. Das Innengewinde kann jedoch auch über die gesamte Länge des Verbindungselementes verlaufen.

Die dem Innengewinde in Einschraubrichtung der Abschleppeinrichtung vorangehende Profilwand der Hohlkammer wird bevorzugt ebenfalls in einem zerspanenden Verfahren, wie Schneiden, Fräsen, Bohren, um ein bestimmtes Mass, insbesondere um das Mass (d) unter Ausweitung der Hohlkammer abgetragen, so dass die Gewindeerhebungen von der zurückversetzten Profilwand vorstehen.

In besonders bevorzugter Ausführung der Erfindung wird auch die gegebenenfalls dem Innengewinde in Einschraubrichtung nachfolgende Profilwand der Hohlkammer in einem zerspanenden Verfahren, teilweise, d.h. wenigstens in einem unmittelbar auf das Innengewinde folgenden Abschnitt, oder vollständig um ein bestimmtes Mass, insbesondere um das Mass (d) unter Ausweitung der Hohlkammer abgetragen, so dass die Gewindeerhebungen von der zurückversetzten Profilwand vorstehen.

Das Zurücksetzen, resp. Abtragen der Profilwand, in den, dem Innengewinde benachbarten Profilwandabschnitten ist einerseits notwendig, damit sich die Abschleppeinrichtung in die Hohlkammer einführen und verschrauben lässt. Andererseits soll die Profilwand eine gewisse Wanddicke nicht überschreiten, damit das Stauch- bzw. Faltverhalten und mit diesem das Energieabsorptionsvermögen des Verbindungselementes nicht beeinträchtigt wird.

Dies bedeutet, dass die Profilwand der besagten Hohlkammer im Strangpress-Ausgangsprofil gegenüber einem Sollwert (h) um wenigstens das Mass (d) der Gewindeerhebungen dicker ausgebildet wird und nachfolgend die ausserhalb des Innengewindes liegenden Wandbereich wieder auf die Solldicke (h) abgetragen werden, so dass lediglich die Gewindeerhebungen eine Wanddicke von (h+d) aufweisen.

Handelt es sich bei der Hohlkammer um eine im Strangpressverfahren seitlich an das Verbindungselement angeformte Hohlkammer, so wird diese vorzugsweise bis auf den das Innengewinde aufnehmenden Kammerabschnitt z. B. mittels Sägen, Schneiden oder Fräsen vom Verbindungselement abgetrennt und entfernt.

In einer zweiten Ausführung der Erfindung umfassen die Befestigungsmittel einen ein Innengewinde aufweisenden Einbaukörper, welcher in die Hohlkammer des Verbindungselementes eingeschoben und in dieser fixiert ist.

Der Einbaukörper weist bevorzugt die Querschnittsgeometrie der Hohlkammer auf, so dass dieser formschlüssig einschiebbar bzw. einsteckbar ist. Der Einbaukörper kann z.B. mittels durch die Profilwand geführte Befestigungsmittel, wie Nieten oder Schrauben, oder über eine Klebverbindung im Hohlraum fixiert sein. Der Einbaukörper kann auch in die Hohlkammer eingepresst und klemmend in diesem fixiert sein. Überdies kann im Verbindungselement ein Anschlag vorgesehen sein, welchem der Einbaukörper in Zugrichtung der Abschleppeinrichtung anliegt. Der Anschlag kann z.B. durch einen Absatz in der Profilwandfläche der Hohlkammer ausgebildet sein. Dieser Absatz kann z. B. durch eine sprunghafte Änderung in der Profilwanddicke ausgebildet sein, wobei die Änderung in der Profilwanddicke in einem zerspanenden Verfahren herbeigeführt werden kann.

Der Einbaukörper ist bevorzugt aus Metall, wie Stahl oder Aluminium bzw. einer Aluminiumlegierung, insbesondere einer Hartaluminiumlegierung. Der Einbaukörper kann jedoch auch aus Kunststoff sein.

In einer besonders bevorzugten Weiterentwicklung der zweiten Ausführungsform ist der Einbaukörper eine, ein Innengewinde enthaltende Zylinderbuchse. Diese wird formschlüssig in eine zylinderförmige Hohlkammer des Verbindungselementes eingeschoben und in dieser nach einer der oben genannten Methoden fixiert.

Handelt es sich bei der Hohlkammer um eine im Strangpressverfahren seitlich an das Verbindungselement angeformte Hohlkammer, so wird diese vorzugsweise bis auf den das Innengewinde aufnehmenden Kammerabschnitt z. B. mittels Sägen, Schneiden oder Fräsen vom Verbindungselement abgetrennt und entfernt.

Die Abschleppeinrichtung besteht bevorzugt aus einer Abschlepp- bzw. einer Einschrauböse mit einem ein Aussengewinde aufweisenden Bolzen. Dieser Gewindebolzen ist in das Innengewinde im Verbindungselement einschraubbar. Die Abschleppöse ist bevorzugt aus Metall, insbesondere aus Stahl.

Die Stossstange ist bevorzugt aus Metall, wie Stahl, und insbesondere einem Leichtmetall, wie Aluminium oder einer Aluminiumlegierung. Die Stossstange ist bevorzugt ein Ein- oder Mehrkammerhohlprofil. Die Stossstange wird bevorzugt aus einem Strangpressprofil gefertigt.

Die verlängerte Achse des Innengewindes der Befestigungsmittel führt durch die Stossstange und definiert einen Bereich, in welchem eine durchgehende Ausnehmung in der Stossstange vorgesehen ist. Durch diese Ausnehmung ist die Einschrauböse in Richtung Innengewinde führbar. Die Ausnehmung ist selbsterklärend im Bereich des Verbindungselementes angeordnet.

Das erfindungsgemässe Stossfängersystem kann sowohl im Front- wie auch im Heckbereich des Fahrzeuges eingesetzt werden. Das Stossfängersystem enthält bevorzugt zwei, seitlich und voneinander beabstandet angeordnet Verbindungselemente, welche direkt oder indirekt an die Fahrzeugstruktur, insbesondere an die beiden Längsträger der Fahrzeugkarosserie angebunden sind.

Die Verbindungselemente können z.B. über Verbindungsplatten, wie Platinen, mit dem Längsträger verbunden sein. Die Verbindungselemente sind hierzu auf die Verbindungsplatten geschweisst. Ferner können die Verbindungselemente auch in den Längsträger eingesteckt und mit diesem z.B. verschraubt sein.

Die Verbindungselemente können stirnseitig an den Zugurt der Stossstange geschweisst oder mit dieser verschraubt sein. In letzterer Ausführung bilden Profilwände des Verbindungselements mit der Stossstange Überlappungsbereiche aus, über welche die Verschraubung ausgeführt wird. Ferner können die Verbindungselemente auch in die Stossstange eingeschuht, d.h. um ein bestimmtes Mass in diese eingeschoben sein. Hierzu sind in der Stossstange Ausnehmungen vorgesehen. Die Verbindungselemente können bis zum vorderen Druckgurt der Stossstange eingeschuht sein.

Die beiden seitlich angeordneten Verbindungselemente können dieselbe Querschnittsgeometrie aufweisen. Da bei einem Stossfängersystem in der Regel nur eine Befestigungseinrichtung zur Anbringung einer Abschleppöse vorgesehen ist, weist das zweite Verbindungselement bevorzugt eine vom ersten, die Befestigungsvorrichtung enthaltende Verbindungselement unterschiedliche Querschnittsgeometrie auf.

Das erfindungsgemässe Stossfängersystem findet bevorzugt Anwendung in Strassenfahrzeugen, wie Personenkraftwagen, Lieferwagen, Kastenwagen oder Kleinbusse.

Die Erfindung betrifft auch ein Verfahren zur Herstellung des vorgenannten Stossfängersystems. Das Verfahren zeichnet sich dadurch aus, dass in einem Strangpressverfahren eine zylinderförmige Hohlkammer in ein Ausgangsprofil integriert wird, und das Ausgangsprofil zu Verbindungselementen abgelängt wird, und mittels einem zerspanenden Verfahren über einen definierten Längsabschnitt der zylinderförmigen Hohlkammer ein Innengewinde in die innere Profilwand eingearbeitet wird, und wenigstens der dem Innengewinde in Einschraubrichtung einer Abschleppeinrichtung vorangehende innere Profilwandabschnitt, vorzugsweise die beidseits vom Innengewinde angeordneten, inneren Profilwandabschnitte, in einem zerspanenden Verfahren um das Mass (d) abgetragen wird, so dass die Gewindeerhebungen von der um das Mass (d) abgetragenen inneren Profilwand vorstehen.

Die Integration der Befestigungsmittel, insbesondere des Innengewindes, in das Verbindungselement führt bei einem Abschleppvorgang zu einer verbesserten Einleitung der Zugkraft in die Fahrzeugstruktur. Die erfindungsgemässe Anordnung der Befestigungsmittel ist auch robust gegenüber einer in einem grossen Winkel zur Fahrzeuglängsrichtung ausgeübten Zugkraft. Die Einarbeitung des Innengewindes in eine zylindrische Hohlkammer des Verbindungselementes führt überdies zu einer Teilereduktion sowie zu einer Senkung der Arbeitsschritte. Insbesondere die manuellen Arbeitsschritte, wie Anschweissen oder Einarbeiten von vorgefertigten Gewindebuchsen in Stossstangen bzw. an Verbindungselemente kann durch automatisierte Bearbeitungsschritte, wie spanende Bearbeitung, ersetzt werden. Beide Effekte bewirken eine Kosteneinsparung.

Im folgenden wird die Erfindung beispielhaft und mit Bezug auf die beiliegenden Zeichnungen näher erläutert. Es zeigen:
- Fig. 1:: Querschnitt durch ein erstes Verbindungselement;
- Fig. 2:: Querschnitt durch ein zweites Verbindungselement;
- Fig. 3:: Längsschnitt durch ein Stossfängersystem mit montierter Abschleppöse;
- Fig. 4:: perspektivische Ansicht eines Stossfängersystems;
- Fig. 5:: Durchsicht eines Stossfängersystems in Fahrtrichtung gemäss Fig. 4;
- Fig. 6:: vergrösserter Querschnitt durch die zentrale Hohlkammer gemäss Fig. 2.

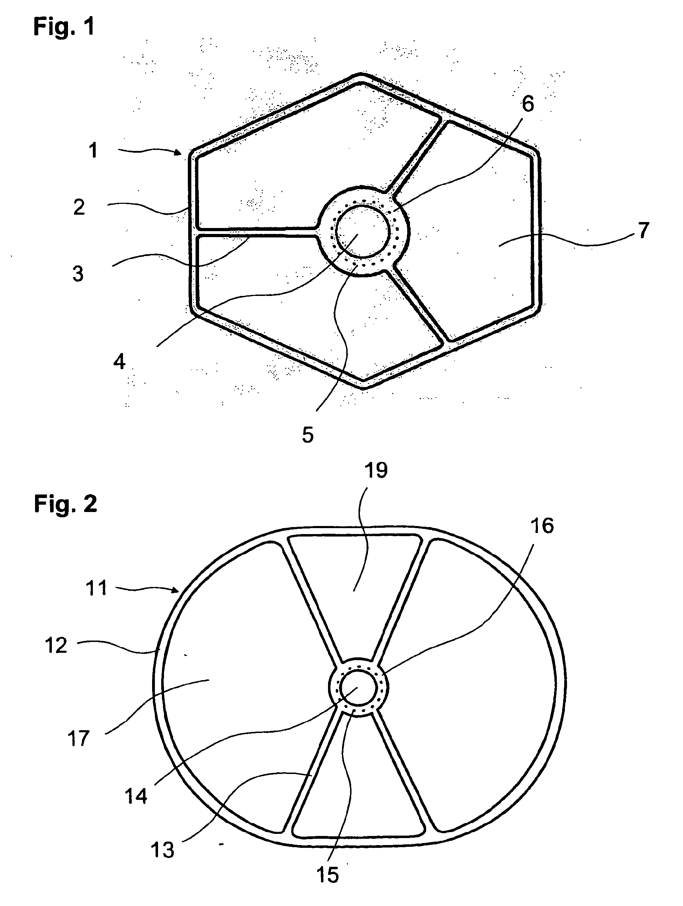

Fig. 1 zeigt eine erste Ausführungsform eines erfindungsgemässen Verbindungselementes 1 mit hexagonalem Profilquerschnitt. Das Verbindungselement 1 ist ein Mehrkammerhohlprofil mit vier Hohlkammern 4, 7. Es enthält äussere Profilwände 2 und eine durch eine innere Profilwand 6 ausgebildete, zentrale, zylinderförmige Hohlkammer 4. Die Hohlkammer 4 ist über Verbindungsstege 3 mit den äusseren Profilwänden 2 verbunden. Die Verbindungsstege 3 führen von der zentralen Hohlkammer 4 im wesentlichen radial nach aussen zu den äusseren Profilwänden 2.

Die gestrichelte Linie 5 wiedergibt den Innenumfang der Hohlkammer 4 nach Abtragen einer Teildicke der in Einschraubrichtung der Abschleppöse dem Innengewinde vorangehenden inneren Profilwand. Das Innengewinde (nicht gezeigt) der Befestigungsmittel ist in einem spanenden Verfahren in die innere Profilwand 16 eingearbeitet.

Fig. 2 zeigt eine zweite Ausführungsform eines erfindungsgemässen Verbindungselementes 11 mit rundlichem Profilquerschnitt. Der Profilquerschnitt enthält zwei parallel zueinander liegende, ebene Seitenwände, die beidseitig über jeweils nach aussen gewölbte Bogenabschnitte miteinander verbunden sind. Das Verbindungselement 11 ist ein Mehrkammerhohlprofil mit fünf Hohlkammern 14, 17, 19. Es enthält äussere Profilwände 12 und eine durch eine innere Profilwand 16 ausgebildete, zentrale, zylinderförmige Hohlkammer 14. Die Hohlkammer 14 ist über Verbindungsstege 13 mit den äusseren Profilwänden 12 verbunden. Die Verbindungsstege 13 führen von der zentralen Hohlkammer 14 im wesentlichen radial nach aussen zu den äusseren Profilwänden 12.

Die gestrichelte Linie 15 wiedergibt den Innenumfang der Hohlkammer, nach Abtragen einer Teildicke der in Einschraubrichtung der Abschleppöse dem Innengewinde vorangehenden inneren Profilwand. Das Innengewinde (nicht gezeigt) der Befestigungsmittel ist in einem spanenden Verfahren in die innere Profilwand 16 eingearbeitet.

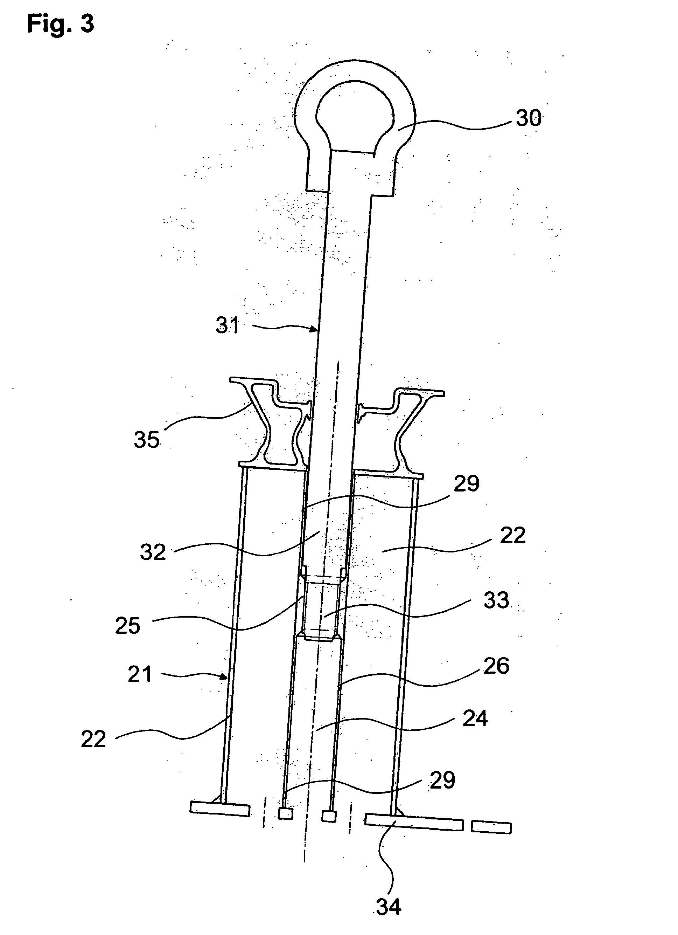

Das Verbindungselement 21 gemäss Fig. 3 enthält eine zentrale, zylinderförmige Hohlkammer 24, welche durch die innere Profilwand 26 begrenzt ist. Die Hohlkammer enthält ein über einen definierten Längsabschnitt in die innere Profilwand 26 eingearbeitetes Innengewinde 25. Die innere Profilwand 26 ist vor und nach dem Innengewinde 25 unter Vergrösserung des Hohlkammerdurchmessers um ein bestimmtes Mass abgetragen. Die Gewindeerhebungen des Innengewindes 25 stehen daher der inneren Profilwandinnenfläche 29 vor. Das Verbindungselement 21 ist mit einer ersten Stirnseite an eine Stossstange 35 angebunden und mit einer zweiten Stirnseite an eine Platine 34 angeschweisst, über welche das Verbindungselement 21 an die Fahrzeugstruktur befestigt wird (nicht gezeigt). Die Stossstange 35 enthält eine durchgehende Ausnehmung durch welche der Bolzen 32 einer Abschleppöse 31 von aussen in die zentrale Hohlkammer 24 geführt ist. Der Bolzen 32 enthält ein Aussengewinde 33, über welches die Abschleppöse 31 in das Innengewinde 25 des Verbindungselementes 21 geschraubt ist. Die Abschleppöse 31 enthält eine ringartige Anformung 30, an welche eine Abschleppseil oder eine Abschleppstange befestigt werden kann.

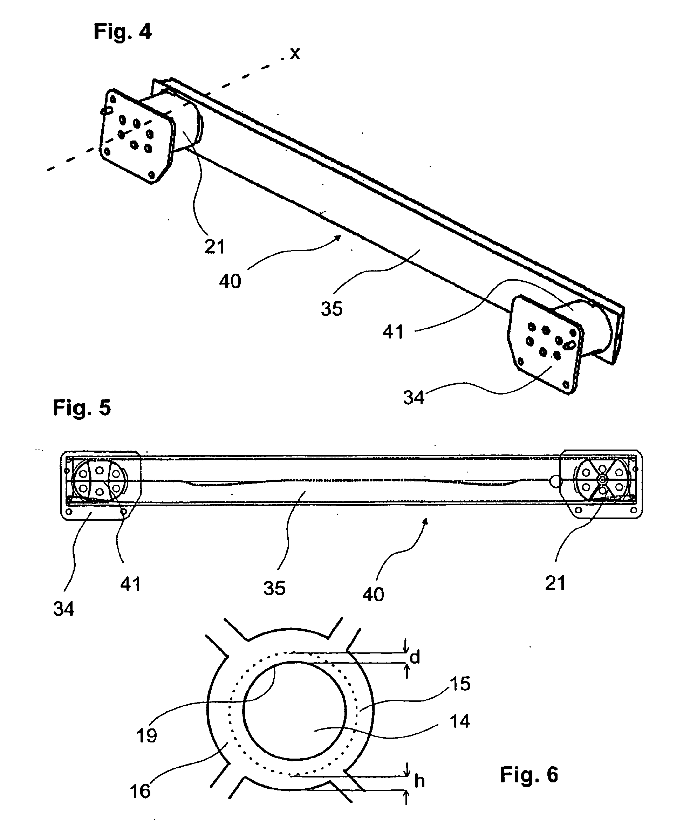

Fig. 4 zeigt ein Stossfängersystem 40 mit Stossstange 35 sowie beidends angeordneten Verbindungselementen 21, 41. Die Verbindungselement sind mit einer ersten Stirnseite an die Stossstange 35 angeschweisst. Mit der anderen Stirnseite sind die Verbindungselemente an Platinen 34 angeschweisst, über welche das Stossfängersystem an die Fahrzeugstruktur befestigt wird.

Fig. 5 zeigt eine Durchsicht des Stossfängersystems 40 gemäss Fig. 4 mit einer Stossstange 35 sowie beidends angeordneten Verbindungselementen 21, 41. Die Verbindungselemente 21, 41 sind mit einer ersten Stirnseite an die Stossstange 35 angeschweisst. Mit der zweiten Stirnseite sind die Verbindungselemente 21, 41 an Platinen 34 angeschweisst. Die Verbindungselemente 21, 41 weisen unterschiedliche Querschnittsgeometrien auf, wobei lediglich ein Verbindungselement 21 Befestigungsmittel gemäss Fig. 2 zur Aufnahme der Abschleppöse vorsieht.

Fig. 6 zeigt einen vergrösserten Ausschnitt der zentralen, zylinderförmigen Hohlkammer 14 gemäss Fig. 2. Die innere Profilwand 16 weist eine Solldicke (h) auf, welche eine optimale Faltgeometrie des als Deformationselement wirkenden Verbindungselements garantiert. Das Strangpress-Ausgangsprofil wird mit einer Gesamtdicke (h+d) der inneren Profilwand 16 hergestellt. Die innere Profilwand 16 wird in der Hohlkammer durch spanende Bearbeitung der inneren Profilwandinnenfläche 19 beidseits des das Innengewinde aufnehmenden Profilabschnitts um das Wanddickenmass (d) auf die Solldicke (h) abgetragen (gestrichelte Linie 15). Die Gewindeerhebungen werden im wesentlichen aus dem Übermass (d) der inneren Profilwand 16 herausgearbeitet und stehen der bearbeiteten inneren Profilwandinnenfläche 19 vor.

## Patentansprüche

1. Stossfängersystem (40) enthaltend eine in Fahrzeugquerrichtung verlaufende Stossstange (35), wenigstens ein an dieser angebrachtes Verbindungselement (21) zum Befestigen der Stossstange (35) an einem Fahrzeug, insbesondere an einem Längsträger eines Personenkraftwagens, sowie Befestigungsmittel (25) zum Anbringen einer lösbaren Abschleppeinrichtung (31), wobei das Verbindungselement (21) ein Mehrkammer-Extrusionsprofil aus Metall mit einer in Fahrzeuglängsrichtung verlaufenden Profillängsächse (x) ist, und das Verbindungselement (21) als Sicherheitselement ausgebildet ist, welches in einem Aufprallereignis durch Stauchung Aufprallenergie absorbiert,
**dadurch gekennzeichnet, dass**
die Befestigungsmittel (25) in einer der Hohlkammern (24) des Verbindungselementes (21) angeordnet sind.

2. Stossfängersystem nach Anspruch 1, wobei die Hohlkammer (24), welche die Befestigungsmittel (25) aufnimmt, eine zylinderförmige Hohlkammer ist.

3. Stossfängersystem nach einem der Ansprüche 1 bis 2, wobei die Hohlkammer (14), welche die Befestigungsmittel aufnimmt, innerhalb des Verbindungselementes (11) angeordnet und durch innere Profilwände (16) begrenzt ist, und die Hohlkammer (14) über einen oder mehrere Verbindungsstege (13) mit äusseren Profilwänden (12) des Verbindungselementes (11) verbunden ist.

4. Stossfängersystem nach einem der Ansprüche 1 bis 3, wobei die Befestigungsmittel (25) zur Anbindung einer Abschleppeinrichtung (31) ein in der Hohlkammer (24) angeordnetes Innengewinde umfassen.

5. Stossfängersystem nach Anspruch 4, wobei das Innengewinde in die Profilwandinnenfläche (19) der Hohlkammer (14) des Verbindungselementes (11) integriert ist.

6. Stossfängersystem nach Anspruch 5, wobei das Innengewinde mittels eines zerspanenden Verfahrens in die Profilwandinnenfläche (19) der Hohlkammer (11) eingearbeitet ist.

7. Stossfängersystem nach einem der Ansprüche 1 bis 4, wobei die Befestigungsmittel einen ein Innengewinde aufweisenden Einbaukörper umfassen, welcher in die Hohlkammer des Verbindungselementes eingeschoben und in dieser fixiert ist.

8. Stossfängersystem nach Anspruch 7, wobei der Einbaukörper eine, ein Innengewinde aufweisende Zylinderbuchse ist, welche in eine zylinderförmige Hohlkammer eingeschoben ist.

9. Stossfängersystem nach einem der Ansprüche 1 bis 8, wobei die Abschleppeinrichtung (31) eine Einschrauböse mit einem ein Aussengewinde (33) aufweisenden Bolzen (32) umfasst, welcher in das Innengewinde (25) der Befestigungsmittel im Verbindungselement (21) einschraubbar ist.

10. Stossfängersystem nach einem der Ansprüche 1 bis 9, wobei die Stossstange (35) eine durchgehende Öffnung aufweist, durch welche die Abschleppöse (31) mit ihrem Gewindebolzen (32) von aussen zu den Befestigungsmittel (25) im Verbindungselement (21) führbar ist.

11. Verfahren zur Herstellung eines Stossfängersystems enthaltend eine in Fahrzeugquerrichtung verlaufende Stossstange (35) sowie wenigstens ein an dieser angebrachtes Verbindungselement (21) zum Befestigen der Stossstange (35) an einem Fahrzeug, insbesondere an einem Längsträger eines Personenkraftwagens, wobei das Verbindungselement (21) ein Mehrkammer-Extrusionsprofil aus Metall mit einer in Fahrzeuglängsrichtung verlaufenden Profillängsachse (x) ist, und das Verbindungselement (21) als Sicherheitselement ausgebildet ist, welches in einem Aufprallereignis durch Stauchung Aufprallenergie absorbiert, **dadurch gekennzeichnet, dass**
in einem Strangpressverfahren eine zylinderförmige Hohlkammer (24) in ein Ausgangsprofil integriert wird, und das Ausgangsprofil zu Verbindungselementen (21) abgelängt wird, und mittels einem zerspanenden Verfahren über einen definierten Längsabschnitt der zylinderförmigen Hohlkammer (24) ein Innengewinde (25) in die innere Profilwand (26) eingearbeitet wird, und wenigstens der dem Innengewinde in Einschraubrichtung einer Abschleppeinrichtung vorangehende innere Profilwandabschnitt (26), vorzugsweise die beidseits vom Innengewinde (25) angeordneten, inneren Profilwandabschnitte (26), in einem zerspanenden Verfahren um das Mass (d) abgetragen wird, so dass die Gewindeerhebungen von der um das Mass (d) abgetragenen inneren Profilwand (26) vorstehen.

## Claims

1. A bumper system (40) containing a bumper bar (35) running in the transverse direction of the vehicle, at least one connecting element (21) arranged thereon for fastening the bumper bar (35) to a vehicle, in particular to a longitudinal beam of a passenger car, and fastening means (25) for arranging a detachable towing arrangement (31), wherein the connecting element (21) is a multi -chamber extruded section of metal with a section longitudinal axis (x) running in the longitudinal direction of the vehicle, and the connecting element (21) is constructed as a safety element, which absorbs by compression impact energy on an impact event,
**characterized in that**
the fastening means (25) are arranged in one of the hollow chambers (24) of the connecting element (21).

2. The bumper system according to Claim 1, wherein the hollow chamber (24) which receives the fastening means (25) is a cylindrical hollow chamber.

3. The bumper system according to one of Claims 1 to 2, wherein the hollow chamber (14) which receives the fastening means is arranged inside the connecting element (11) and is delimited by inner section walls (16), and the hollow chamber (14) is connected with outer section walls (12) of the connecting element (11) via one or more connecting webs (13).

4. The bumper system according to one of Claims 1 to 3,
wherein the fastening means (25) for connecting a towing arrangement (31) comprise an internal thread arranged in the hollow chamber (24).

5. The bumper system according to Claim 4, wherein the internal thread is integrated into the section wall inner surface (1 9) of the hollow chamber (14) of the connecting element (11).

6. The bumper system according to Claim 5, wherein the internal thread is worked into the section wall inner surface (19) of the hollow chamber (11) by means of a machining process.

7. The bumper system according to one of Claims 1 to 4,
wherein the fastening means comprise an insert body having an internal thread, which is pushed into the hollow chamber of the connecting element and is fixed therein.

8. The bumper system according to Claim 7, wherein the insert body is a cylinder bush having an internal thread, which is pushed into a cylindrical hollow chamber.

9. The bumper system according to one of Claims 1 to 8,
wherein the towing arrangement (31) comprises a screw-in eye with a bolt (32) having an external thread (33), which bolt is able to be screwed into the internal thread (25) of the fastening means in the connecting element (21).

10. The bumper system according to one of Claims 1 to 9, wherein the bumper bar (35) has a continuous opening through which the towing eye (31) with its threaded bolt (32) is able to be guided from the exterior to the fastening means (25) in the connecting element (21).

11. A method fo r the production of a bumper system containing a bumper bar (35) running in the transverse direction of the vehicle, and at least one connecting element (21) arranged thereon for fastening the bumper bar (35) to a vehicle, in particular to a longitudinal beam of a passenger car, wherein the connecting element (21) is a multi -chamber extruded section of metal with a section longitudinal axis (x) running in the longitudinal direction of the vehicle, and the connecting element (21) is constructed as a safety element, which absorbs by compression impact energy on an impact event,
**characterized in that**
in an extrusion process a cylindrical hollow chamber (24) is integrated into an initial section, and the initial section is cut to length into connecting elements (21), and by means of a machining process over a defined longitudinal section of the cylindrical hollow chamber (24) an internal thread (25) is worked into the inner section wall (26), and at least the inner profile wall section (26) preceding the internal thread in the screwing -in direction of a towing arrangement, preferably the inner profile wall sections (26) arranged on both sides of the internal thread (25), is removed in a machining process by the measurement (d), so that the thread elevations project from the inner section wall (26) which has been removed by the measurement (d).

## Revendications

1. Système de pare-chocs (40) contenant un pare-chocs (35) agencé dans le sens transversal du véhicule, au moins un élément de liaison (21) placé sur ce pare-chocs pour la fixation du pare-chocs (35) sur un véhicule, en particulier sur un longeron d'une voiture de tourisme, ainsi que des moyens de fixation (25) pour le placement d'un dispositif de remorquage (31) amovible, l'élément de liaison (21) étant un profilé d'extrusion multi-chambres en métal avec un axe longitudinal de profilé (x) s'étendant dans le sens longitudinal du véhicule et l'élément de liaison (21) étant conçu sous forme d'élément de sécurité, qui absorbe par refoulement l'énergie d'impact lors d'un impact,
**caractérisé en ce que**
les moyens de fixation (25) sont disposés dans l'une des chambres creuses (24) de l'élément de liaison (21).

2. Système de pare-chocs selon la revendication 1, la chambre creuse (24), qui reçoit les moyens de fixation (25), étant une chambre creuse de forme cylindrique.

3. Système de pare-chocs selon l'une des revendications 1 à 2, la chambre creuse (14), qui reçoit les moyens de fixation, étant disposée à l'intérieur de l'élément de liaison (11) et étant limitée par des parois de profilé (16) internes, et la chambre creuse (14) étant reliée par une ou plusieurs entretoises de liaison (13) à des parois de profilé (12) externes de l'élément de liaison (11).

4. Système de pare-chocs selon l'une des revendications 1 à 3, les moyens de fixation (25) pour le rattachement d'un dispositif de remorquage (31) comprenant un filetage intérieur disposé dans la chambre creuse (24).

5. Système de pare-chocs selon la revendication 4, le filetage intérieur étant intégré dans la surface intérieure de paroi de profilé (19) de la chambre creuse (14) de l'élément de liaison (11).

6. Système de pare-chocs selon la revendication 5, le filetage intérieur étant intégré au moyen d'un procédé d'usinage par enlèvement de copeaux dans la surface intérieure de paroi de profilé (19) de la chambre creuse (11).

7. Système de pare-chocs selon l'une des revendications 1 à 4, les moyens de fixation comprenant un corps intégré présentant un filetage intérieur, qui est introduit dans la chambre creuse de l'élément de liaison et est fixé dans celle-ci.

8. Système de pare-chocs selon la revendication 7, le corps intégré étant une chemise présentant un filetage intérieur, qui est introduite dans une chambre creuse de forme cylindrique.

9. Système de pare-chocs selon l'une des revendications 1 à 8, le dispositif de remorquage (31) comprenant un anneau de vissage avec un boulon (32) présentant un filetage extérieur (33), lequel boulon peut être vissé dans le filetage intérieur (25) des moyens de fixation dans l'élément de liaison (21).

10. Système de pare-chocs selon l'une des revendications 1 à 9, le pare-chocs (35) présentant une ouverture continue, par laquelle l'anneau de remorquage (31) peut être guidé avec son boulon fileté (32) de l'extérieur vers les moyens de fixation (25) dans l'élément de liaison (21).

11. Procédé pour fabriquer un système de pare-chocs contenant un pare-chocs (35) agencé dans le sens transversal du véhicule et au moins un élément de liaison (21) placé sur ce pare-chocs pour la fixation du pare-chocs (35) sur un véhicule, en particulier sur un longeron d'une voiture de tourisme, l'élément de liaison (21) étant un profilé d'extrusion multi-chambres en métal avec un axe longitudinal de profilé (x) agencé dans le sens longitudinal du véhicule, et l'élément de liaison (21) étant conçu comme élément de sécurité, lequel absorbe par refoulement l'énergie d'impact lors d'un impact,
**caractérisé en ce que**
une chambre creuse (24) de forme cylindrique est intégrée dans un profilé de départ dans un procédé d'extrusion, et le profilé de départ est mis à la longueur pour obtenir des éléments de liaison (21), et un filetage intérieur (25) est intégré dans la paroi de profilé (26) intérieure au moyen d'un procédé d'usinage par enlèvement de copeaux sur une partie longitudinale définie de la chambre creuse (24) cylindrique, et au moins la partie de paroi de profilé (26) intérieure, précédant le filetage intérieur dans le sens de vissage d'un dispositif de remorquage, de préférence les parties de paroi de profilé (26) intérieures, disposées des deux côtés du filetage intérieur (25), étant diminuées de la cote (d) dans un procédé d'usinage par enlèvement de copeaux, de sorte que les sommets du filetage dépassent de la paroi de profilé (26) intérieure réduite de la cote (d).
